# EUROPEAN PATENT SPECIFICATION

(11) **EP 0 225 194 B1**
(45) Date of publication and mention of the grant of the patent: **07.07.1993**
(21) Application number: 86309366.2
(22) Date of filing: 01.12.1986
(51) Int. Cl.: C08G 65/40

(54) **Thermoplastic linear aromatic polyetherdiketones and process for obtaining the same**
Thermoplastische lineare aromatische Polyetherdiketone und Verfahren zu deren Herstellung
Polyétherdicétones aromatiques linéaires thermoplastiques et procédé de préparation

(30) Priority: 02.12.1985 IT 2305685
(43) Date of publication of application: 10.06.1987
(73) Proprietor: Montedison S.p.A., I-20121 Milan (IT)
(72) Inventor: Foa', Marco, I-28100 Novara (IT); Bencini, Elena, I-28100 Novara (IT)
(74) Representative: Whalley, Kevin

(56) References cited:
- EP-A- 1 879
- DE-A- 1 909 441
- FR-A- 2 359 867
- US-A- 3 594 446
- CHEMICAL ABSTRACTS, vol. 99, no. 2, 11th July 1983, page 12, abstract no. 6228w, Columbus, Ohio, US; PL-A-117 224 (UNIWERSYTET MIKOLAJA KOPERNIKA) 14-01-1983
- Polymer 26 (1985) 1994
- Elias/Vohwinkel, Neue Polymere Werkstoffe, Carl Hauser Verlag, Munchen 1983, pp. 172-177
- PL-A-117 224 (Italian translation)

## Description

The present invention relates to thermoplastic linear aromatic polyetherdiketones, and to a process for obtaining the same.

More particularly the invention relates to thermoplastic linear aromatic polyetherdiketones and corresponding copolymers containing in the repeating units a diketone group -CO-CO-.

There are known in the literature, and specifically in Polish Patent No. 117,224, oligomers containing in the repeating unit a diketone group. However, in the above mentioned oligomers, the repeating unit containing the diketone group repeats only from 2 to 4 times.

US-A-3 594 446 describes a process for preparing heat-resistant, linear aromatic copolymers, which comprises reacting together alkali salts of an aromatic dithiol and an aromatic dipherol, with an aromatic dihalogen compound wherein the aromatic groups of the latter are linked by an electron-attractive group which may be diketo.

Attention is also drawn to EP-A-0001879, in particular Example 1 thereof, which describes a method of preparing high molecular weight polyetherketones; and to FR-A-2359867, which relates to a process for preparing aromatic polyethers.

The present invention provides thermoplastic linear aromatic polyetherdiketones consisting of repeating units of the general formula: 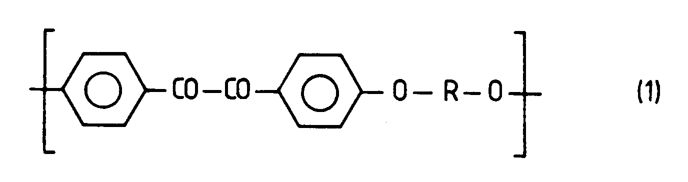
wherein R is an arylene radical containing from 1 to 3 aromatic rings directly joined among them or condensed or joined by one or more of the following difunctional groups:
-0-, -C0-, -CO-CO-, -SO₂-, -C(CH₃)₂,
-C(CF₃)₂-, characterised in that the
polyetherdiketone is of high molecular weight and has an inherent viscosity in 96% sulfuric acid of at least 0.2dl/g.

The polymer of the present invention may be, according to the nature of the group R, crystalline or amorphous.

In the event that it is able to crystallise, the crystallinity measured by X diffraction, may reach 60% by volume.

The polymer shows a high thermal stability detectable both by thermogravimetric measurements and from the lack of molecular weight alterations. The properties of the polymer make it particularly suitable for use in manufactured articles which are either continuously or at intervals subjected to mechanical, static or dynamic stresses, even at high temperatures.

In particular, the polymer of the present invention may be used for obtaining manufactured articles prepared according to the generally used processing techniques of thermoplastic polymers such as, for instance, molding and extrusion; it can be worked as film or fiber, it can be used as a matrix for composite materials based on fiber or fillers, or it can be used for preparing mixes with other polymers.

The polymer of the present invention can be also used in the field of structural adhesives or to cover surfaces.

The polymer of the present invention has an inherent viscosity measured in 96% sulfuric acid of at least 0.2 dl/g, in particular from 0.2 to 2 dl/g, and more preferably from 0.4 to 1.5 dl/g.

The polymer may be characterised either by the same repeating units or by two or more types of units which differ by changing the radical R.

The invention in another aspect provides a process for the preparation of thermoplastic linear aromatic polyetherdiketones consisting of repeating units of the general formula (1), wherein dihalides or mixtures thereof, having the general formula: 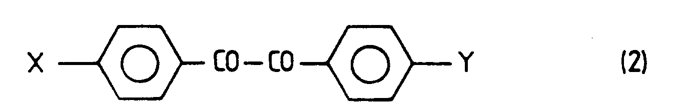
wherein X and Y, which may be the same or different, represent a halogen, are allowed to react with bisphenols or mixtures thereof of the general formula:

OH - R OH (3)

wherein R has the same meaning as defined above, in equimolar ratios, in the presence of salifying agents such as carbonates and/or bicarbonates of alkali metals and in a solvent.

Any carbonate and/or bicarbonate of an alkali metal may be used for the polycondensation reaction, but preferred (bi)carbonates are potassium carbonate and/or bicarbonate or sodium carbonate and/or bicarbonate, used alone or in admixture.

The abovementioned salts are preferably allowed to react with the bisphenol of general formula (3) in ratios comprised from stoichiometric ratio to double the stoichiometric ratio.

Alternatively alkali salts of bisphenols (3) prepared according to known techniques may be used directly.

The polycondensation reaction is carried out in the presence of a solvent and under substantially anhydrous conditions and the water released during the salification of bisphenol in situ with the alkali carbonates and/or bicarbonates is preferably removed by a nitrogen stream or by azeotropic distillation.

The reaction temperature is preferably from 180°C to 320°C and may vary within these limits during the polycondensation; however, the reaction temperature is more preferably from 220°C to 300°C.

The polycondensation solvent is suitably selected such as to have a boiling temperature compatible with the reaction temperature, a good polarity and a good solubility both for the reagents and for the final products.

Diarylsulfones and sulfoxides, such as diphenylsulfone and diphenylsulfoxide, and the aromatic nitroderivatives such as nitrobenzene, have proved to be suitable solvents.

The process allows for the preparation of polymers over a wide range of molecular weights as shown by the measurement of the inherent viscosity obtained in 96% sulfuric acid at a 0.5% concentration and at 30°C. The polymers thus obtained preferably exhibit a viscosity of from 0.2 to 2 dl/g, and more preferably from 0.4 to 1.5 dl/g.

The polymer is recovered at the end of the reaction from the solution by known methods, such as, for instance, by cooling and subsequent precipitation, by evaporation or by precipitation with a non-solvent and subsequent filtration.

The dihalides of general formula (2) are known products; they may be obtained by benzoinic condensation as described in "Organic Reactions" 4,269,1948.

Examples of bisphenols particularly suitable for the polycondensation reaction of the process of the present invention are hydroquinone, 4,4'-dihydroxydiphenyl, 4,4'-dihydroxydiphenylether, 4,4'-dihydroxybenzophenone, 4,4'-dihydroxydibenzoyl, 4,4'-dihydroxyphenylsulfone, bisphenol A and bisphenol A-F.

Any dihalide of the general formula (2) may be used for the polycondensation reaction, but the corresponding fluorinated and/or chlorinated products are the preferred ones.

Examples of dihalides suitable for the polycondensation reaction of the process of the present invention are: 4,4'-difluorodibenzoyl; 4,4'-chlorofluorodibenzoyl; 4,4'-dichlorodibenzoyl, etc.

The invention will be further described with reference to the following illustrative Examples.

### Example 1

Into a 5-necked, round-bottomed flask, provided with a mechanical agitator, thermometer, cooler and pipe for the introduction of gas, under nitrogen, there were introduced 200 g (0.812 moles) of 4,4'-difluorodibenzoyl, 89.35 g (0.812 moles) of hydroquinone and 508 g of diphenylsulfone. The mixture was heated at 180°C under stirring and at this temperature, under a nitrogen stream, 114 g (0.826 moles) of anhydrous K₂CO₃ were introduced. The temperature was raised to 200°C and after 1 hour was raised to 250°C and after a further hour to 290°C. During the reaction the formed water and carbon dioxide were removed.

The polymerization was ceased after having kept the mixture for one hour at 290°C. The mixture was cooled, and the obtained solid was milled, washed with acetone, water and acetone, and methanol. After drying under vacuum at 140°C, 240 g of polymer were obtained having the following repeating unit: 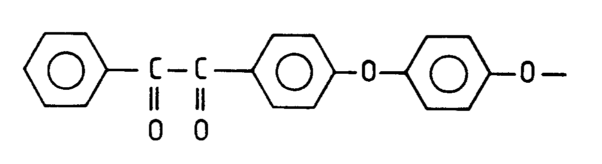
The polymer had an inherent viscosity of 0.60, measured in 96% H₂SO₄. The glass transition temperature of the polymer was Tg=152°C and the melting temperature Tm was 312°C; the crystallinity was 31%.

Using the powder some laminae were prepared which had been compression molded at a temperature of 350°C and cooled. By cooling the laminae at a rate of about 100°C/min, an amorphous product was obtained.

Samples were obtained from the laminae; these samples were then mechanically characterised by obtaining the following data:

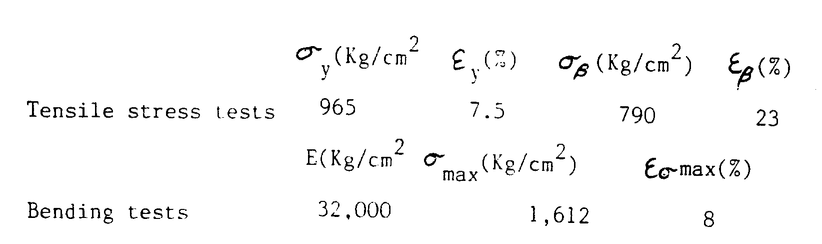

After firing at 258°C for 4 hours and cooling at 1-2°C/min, the sample exhibited a crystallinity, when measured by X-ray absorption, equal to 21%. The mechanical characteristics of the sample were as follows:

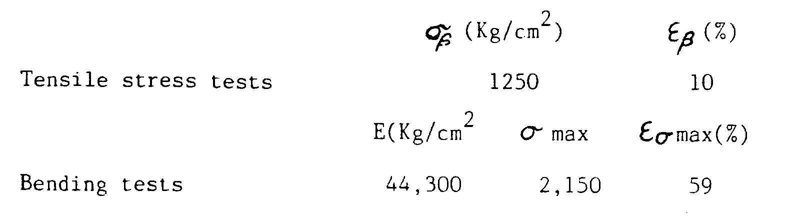

### Example 2

Into a 250 ml round-bottomed flask, provided with a mechanical stirrer, thermometer, and pipe for the introduction of gas and Dean-Stark type apparatus for the separation of water, there were introduced, under a nitrogen stream, 10 g (0.0346 mol) of 4,4'-dichlorodibenzoyl, 3.8 g (0.0346 mol) of hydroquinone, 5.52 g (0.040 mol) of anhydrous K₂CO₃, 30 g of diphenylsulfone and 20 ml of toluene for the azeotropic distillation of water.

After having filled the Dean-Stark apparatus with toluene, heating was started, under a nitrogen flow, while stirring the reaction mass.

The boiling temperature of the mixture was progressively increased from 130°C up to about 230°C while progressively tapping the water-toluene azeotrope and successively all the toluene through the Dean-Stark apparatus. The duration of this first step was about 3 hours. The temperature was then increased to 250°C and maintained for 1 h in order to complete the polymerization.

The mixture was then cooled and the polymer recovered according to the procedures of the preceding example.

10.8 g of polymer were separated, having an inherent viscosity measured in 96% H₂SO₄, equal to 1.07; Tg was 155°C, Tm was 300°C and the crystallinity was 25%.

### Example 3

In the same apparatus of Example 1, according to the same procedures, there were introduced 27.6 g (0.112 mol) of 4,4'-difluorodibenzoyl, 2.71 g (0.011 mol) of 4,4'-dihydroxydibenzoyl, and 11.19 g (0.101 mol) of hydroquinone and 77 g of diphenylsulfone. The temperature was raised to 180°C and 16 g of anhydrous K₂CO₃ (0.115 mol) were added. By following the procedures described in Example 1, a copolymer was separated having the following repeating units: 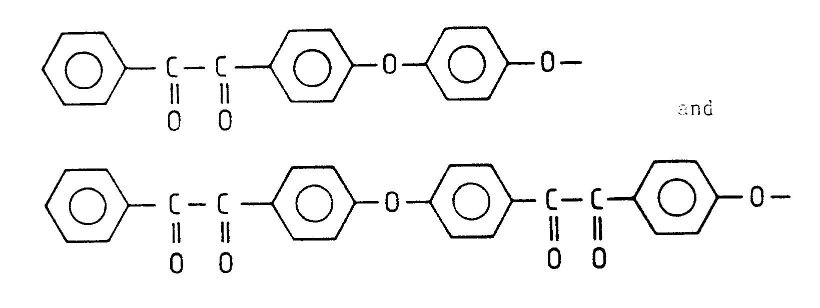
The inherent viscosity of the copolymer, when measured in chloronaphthalene at 200°C, was 0.51, corresponding to a viscosity equal to 0.6 when measured in 96% H₂SO₄; Tg was 156°C, Tm was 284°C, and the crystallinity was 24%.

### Example 4

Into a 500 ml round-bottomed flask provided with a mechanical stirrer, thermometer, and a pipe for the introduction of gas and a condenser for the solvent, there were introduced, under a nitrogen flow, 4.1 g of 4,4'-difluorodibenzoyl (0.0166 mol), 3.1 g of 4,4'-dihydroxydiphenyl (0.0166 mol), 5 g of anhydrous potassium carbonate (0.036 mol) and 100 ml of nitrobenzene. The temperature was increased up to the boiling temperature by maintaining a slight nitrogen flow. The condensed solvent was allowed to pass through molecular sieves before being recycled in the reaction flask.

After 5 hours, the polymerisation was interrupted. The mixture cooled to room temperature was added with acetone and concentrated HCl.

The precipitated polymer was filtered and washed with H₂O and acetone.

After drying for 3 hours at 130-140°C, 5.4 g of polymer were obtained having the following repeating unit: 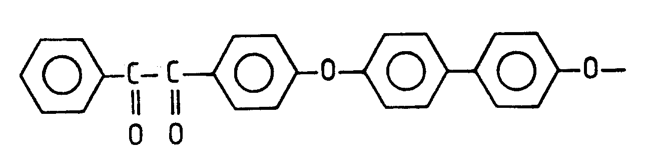
The inherent viscosity in 96% H₂SO₄ of the obtained polymer was 1.07; Tg was 178°C, Tm was 272°C, and the crystallinity was 37%.

### Example 5

Into the same apparatus described in the preceding example, and according to the same procedures, 9.90 g of 4,4'-difluorodibenzoyl (0.040 mol), 8.2 g of 4,4'-dihydroxydiphenylether (0.040 mol), 11 g of K₂CO₃ (0.08 mol) and 240 ml of nitrobenzene were introduced.

By following the procedures described in the preceding example, 12.5 g of polymer were obtained having the following repeating unit: 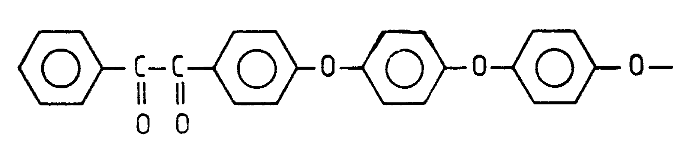
The inherent viscosity of the polymer, when measured in 96% H₂SO₄ was 0.75; Tg was 146°C, Tm was 256°C, and the crystallinity was 16%.

### Example 6

Into the same apparatus as described in Example 4, and according to the same procedures, there were introduced 9.84 g of 4,4'-difluorodibenzoyl (0.04 mol), 8.6 g of 4,4'-dihydroxybenzophenone (0.04 mol), 11 g (0.08 mol) of anhydrous K₂CO₃ and 240 ml of nitrobenzene.

By following the same procedures as described in Example 4, 14 g of polymer were obtained having the following repeating unit: 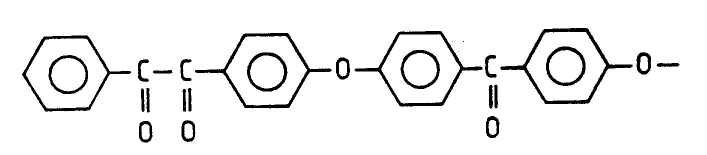
and exhibiting the following characteristics: inherent viscosity, measured in 96% H₂SO₄, equal to 0.37; Tg = 148°C, Tm = 289°C, and crystallinity = 36%.

## Claims

1. A thermoplastic linear aromatic polyetherdiketone consisting of repeating units of the general formula: 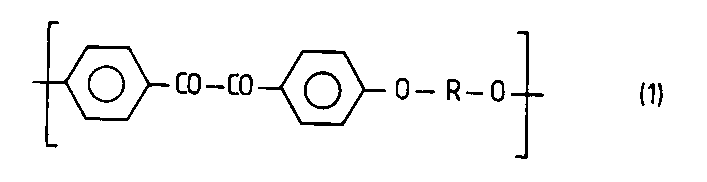 wherein R is an arylene radical containing from 1 to 3 aromatic rings directly joined among them or condensed or joined by one or more of the following difunctional groups:
-0-, -CO-, -CO-CO-, -SO₂-, -C(CH₃)₂-,
-C(CF₃)₂-, characterized in that said
polyetherdiketone is of high molecular weight and has an inherent viscosity in 96% sulfuric acid at a 0.5% concentration and at 30°C of at least 0.2 dl/g.

2. A polyetherdiketone as claimed in claim 1, characterized by having crystalline structure of up to 60% by volume.

3. A polyetherdiketone as claimed in claim 1 or 2, characterized by having an inherent viscosity of from 0.2 to 2 dl/g.

4. A polyetherdiketone as claimed in claim 3, characterized by having an inherent viscosity of from 0.4 to 1.5 dl/g.

5. A process for the preparation of a thermoplastic, linear aromatic polyetherdiketone according to claim 1, characterized by reacting dihalide of general formula: 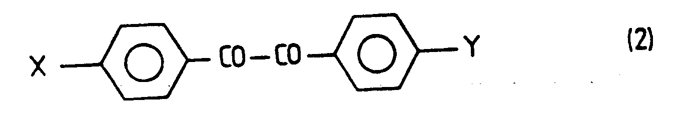 wherein X and Y, which may be the same or different, represent a halogen, with a bisphenol of the general formula:
OH - R - OH (3)
wherein R is as defined in claim 1, in equimolar ratio, in the presence of a salifying agent and in a solvent.

6. A process as claimed in claim 5, characterized in that a mixture of dihalides of the general formula (2) is used.

7. A process as claimed in claim 5 or 6, characterized in that a mixture of bisphenols of the general formula (3) is used.

8. A process as claimed in any of claims 5 to 7, characterized in that the said salifying agent is a carbonate and/or a bicarbonate of an alkali metal.

9. A process as claimed in claim 8, characterized in that the carbonate and/or bicarbonate of the alkali metal is fed to the reaction in a ratio with the bisphenol of general formula (3) comprised from the stoichiometric ratio to double the stoichiometric ratio.

10. A process as claimed in claim 8 or 9, characterized in that the reaction is carried out in the presence of potassium or sodium carbonate and/or bicarbonate, used alone or in admixture, as the said salifying agent.

11. A process as claimed in any of claims 5 to 10, characterized in that an alkali salt of a bisphenol of general formula (3) is directly used.

12. A process as claimed in any of claims 5 to 11, characterized in that the reaction is carried out at a temperature from 180° to 320°C, more preferably from 220° to 300°C.

13. A process as claimed in any of claims 5 to 12, characterized in that the solvent is selected to have a boiling temperature compatible with the reaction temperature, a good polarity and a good solubility both for the reagents and the final products.

14. A process as claimed in claim 13, characterized in that the solvent is selected from diarylsulfones and sulfoxides and nitroderivatives.

15. A process as claimed in claim 14, characterized in that the solvent is selected from diphenylsulfone, diphenylsulfoxide and nitrobenzene.

16. A process as claimed in any of claims 5 to 15, characterized in that the dihalide of general formula (2) are selected from fluorinated and/or chlorinated compounds.

## Patentansprüche

1. Thermoplastische lineare aromatische Polyetherdiketone, bestehend aus Struktureinheiten der allgemeinen Formel: 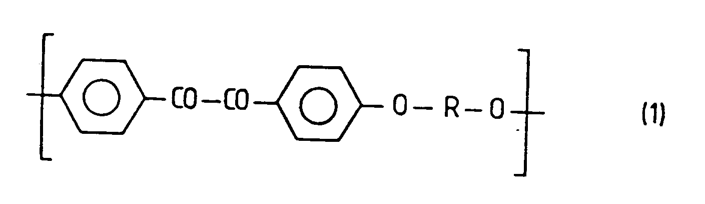 worin R ein Arylenrest mit 1 bis 3 aromatischen Ringen ist, welche direkt miteinander verbunden oder kondensiert oder verbunden sind durch eine oder mehrere der folgenden difunktionellen Gruppen: -O-, -CO-, -CO-CO-, -SO₂-, -C(CH₃)₂-, -C(CF₃)₂-, dadurch gekennzeichnet, daß das Polyetherdiketon ein hohes Molekulargewicht hat und in 96% Schwefelsäure bei einer Konzentration von 0,5% und 30°C eine logarithmische Viskositätszahl von mindestens 0,2 dl/g hat.

2. Polyetherdiketon nach Anspruch 1, dadurch gekennzeichnet, daß es eine kristalline Struktur von bis zu 60 Volumenprozent hat.

3. Polyetherdiketon nach Anspruch 1 oder 2, dadurch gekennzeichnet, daß es eine logarithmische Viskositätszahl von 0,2 bis 2 dl/g hat.

4. Polyetherdiketon nach Anspruch 3, dadurch gekennzeichnet, daß es eine logarithmische Viskositätszahl von 0,4 bis 1,5 dl/g hat.

5. Verfahren zur Herstellung eines thermoplastischen linearen aromatischen Polyetherdiketons nach Anspruch 1, gekennzeichnet durch Umsetzen eines Dihalogenids der allgemeinen Formel: 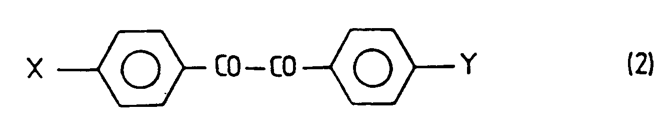 worin X und Y, die gleich oder verschieden sein können, ein Halogen bedeuten, mit einem Bisphenol der allgemeinen Formel:
OH - R - OH (3)
worin R wie in Anspruch 1 definiert ist, in äquimolarem Verhältnis in Gegenwart eines Salzbildners und in einem Lösungsmittel.

6. Verfahren nach Anspruch 5, dadurch gekennzeichnet, daß eine Mischung von Dihalogeniden der allgemeinen Formel (2) verwendet wird.

7. Verfahren nach Anspruch 5 oder 6, dadurch gekennzeichnet, daß eine Mischung von Bisphenolen der allgemeinen Formel (3) verwendet wird.

8. Verfahren nach irgendeinem der Ansprüche 5 bis 7, dadurch gekennzeichnet, daß der Salzbildner ein Carbonat und/oder Bicarbonat eines Alkalimetalls ist.

9. Verfahren nach Anspruch 8, dadurch gekennzeichnet, daß das Carbonat und/oder Bicarbonat des Alkalimetalls der Reaktion in einem Verhältnis zu dem Bisphenol der allgemeinen Formel (3) zugeführt wird, weiches vom stöchiometrischen Verhältnis bis zum Doppelten des stöchiometrischen Verhältnisses reicht.

10. Verfahren nach Anspruch 8 oder 9, dadurch gekennzeichnet, daß die Reaktion in Gegenwart von Kalium- oder Natriumcarbonat und/oder -bicarbonat, allein oder in Mischung, als Salzbildner durchgeführt wird.

11. Verfahren nach irgendeinem der Ansprüche 5 bis 10, dadurch gekennzeichnet, daß direkt ein Alkalisalz eines Bisphenols der allgemeinen Formel (3) verwendet wird.

12. Verfahren nach irgendeinem der Ansprüche 5 bis 11, dadurch gekennzeichnet, daß die Reaktion bei einer Temperatur von 180 bis 320°C, vorzugsweise 220 bis 300°C, durchgeführt wird.

13. Verfahren nach irgendeinem der Ansprüche 5 bis 12, dadurch gekennzeichnet, daß das Lösungsmittel so ausgewählt wird, daß es einen mit der Reaktionstemperatur kompatiblen Siedepunkt, gute Polarität und gute Löslichkeit sowohl für die Reaktanten und die Endprodukte hat.

14. Verfahren nach Anspruch 13, dadurch gekennzeichnet, daß das Lösungsmittel ausgewählt wird aus Diarylsulfonen und Sulfoxiden und Nitroderivaten.

15. Verfahren nach Anspruch 14, dadurch gekennzeichnet, daß das Lösungsmittel ausgewählt wird aus Diphenylsulfon, Diphenylsulfoxid und Nitrobenzol.

16. Verfahren nach irgendeinem der Ansprüche 5 bis 15, dadurch gekennzeichnet, daß das Dihalogenid der allgemeinen Formel (2) ausgewählt wird aus fluorierten und/oder chlorierten Verbindungen.

## Revendications

1. Une polyétherdicétone aromatique linéaire thermoplastique composée d'unités répétitives, présentant la formule générale: 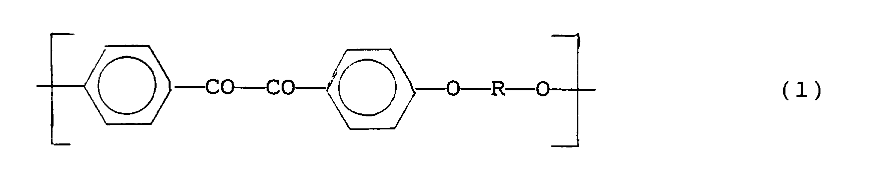 dans laquelle:
R représente un radical arylène contenant entre 1 et 3 cycles aromatiques liés directement les uns aux autres ou condensés ou liés par un ou plusieurs des groupes difonctionnels:
-O-, -CO-, -CO-CO-, -SO₂-, -C(CH₃)₂-, -C(CF₃)₂-, caractérisé en ce que ladite polyétherdicétone a un poids moléculaire élevé et a une viscosité inhérente mesurée dans de l'acide sulfurique à 96%, à une concentration de 0,5% et à 30°C, qui est au moins égale à 0,2 dl/g.

2. Une polyétherdicétone selon la revendication 1, caractérisée en ce qu'elle présente une structure cristalline jusqu'à 60% en volume.

3. Une polyétherdicétone selon la revendication 1 ou 2, caractérisée en qu'elle présente une viscosité inhérente comprise entre 0,2 et 2 dl/g.

4. Une polyétherdicétone selon la revendication 3, caractérisée en ce qu'elle présente une viscosité comprise entre 0,4 et 1,5 dl/g.

5. Un procédé de préparation d'une polyétherdicétone aromatique linéaire thermoplastique selon la revendication 1, caractérisé par la réaction d'un dihalogénure de formule générale: 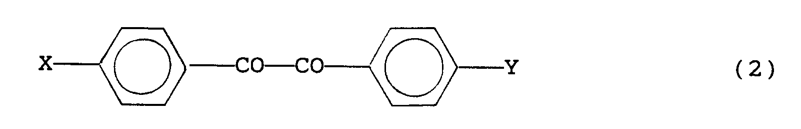 dans laquelle:
X et Y, qui devaient être identiques ou différents, représentent un atome d'halogène,
avec un bisphénol de formule générale:
OH - R - OH (3)
dans laquelle:
R est tel que défini dans la revendication 1,
dans un rapport équimolaire, en présence d'un agent salifiant et dans un solvant.

6. Un procédé selon la revendication 5, caractérisé en ce qu'un mélange de dihalogénures de formule générale (2) est utilisé.

7. Un procédé selon la revendication 5 ou 6, caractérisé en ce qu'un mélange de bisphénols de formule générale (3) est utilisé.

8. Un procédé selon l'une quelconque des revendications 5 à 7, caractérisé en ce que ledit agent salifiant correspond à un carbonate et/ou un bicarbonate de métal alcalin.

9. Un procédé selon la revendication 8, caractérisé en ce que le carbonate et/ou le bicarbonate de métal alcalin est utilisé, dans la réaction, dans un rapport avec le biphénol de formule (3) compris entre le rapport stoechiométrique et le double du rapport stoechiométrique.

10. Un procédé selon la revendication 8 ou 9, caractérisé en ce que la réaction est mise en oeuvre en présence de bicarbonate et/ou carbonate de sodium ou de potassium, utilisé seul ou en mélange, en tant qu'agent salifiant.

11. Un procédé selon l'une quelconque des revendications 5 à 10, caractérisé en ce que le sel alcalin de biphénol de formule générale (3) est utilisé directement.

12. Un procédé selon l'une quelconque des revendications 5 à 11, caractérisé en ce que la réaction est mise en oeuvre à une température comprise entre 180° et 320°C et de préférence entre 220° et 300°C.

13. Un procédé selon l'une quelconque des revendications 5 à 12, caractérisé en ce que le solvant est sélectionné pour présenter une température d'ébullition compatible avec la température réactionnelle, une bonne polarité et une bonne solubilité vis-à-vis des réactifs et des produits finaux.

14. Un procédé selon la revendication 13, caractérisé en ce que le solvant est sélectionné parmi: diarylsulfones, sulfoxydes et dérivés nitrés.

15. Un procédé selon la revendication 14, caractérisé en ce que le solvant est sélectionné parmi: diphénylsulfone, diphénylsulfoxyde et nitrobenzène.

16. Un procédé selon l'une quelconque des revendications 5 à 15, caractérisé en ce que le dihalogénure de formule générale (2) est sélectionné parmi les dérivés fluorés et/ou chlorés.
